# EUROPEAN PATENT APPLICATION

(11) **EP 0 853 239 A2**
(43) Date of publication of application: **15.07.1998**
(21) Application number: 98300219.7
(22) Date of filing: 12.01.1998
(51) Int. Cl.: G01N 27/406, G01N 27/407

(54) **Gas sensor and heater unit**

(30) Priority: 13.01.1997 JP 14822/97; 03.10.1997 JP 286234/97
(71) Applicant: KABUSHIKI KAISHA RIKEN, Chiyoda-ku Tokyo 102 (JP)
(72) Inventor: Kiyota, Fumio, c/o Kabushiki Kaisha Riken, Kumagaya-shi, Saitama-ken (JP); Kunimoto, Akira, c/o Kabushiki Kaisha Riken, Kumagaya-shi, Saitama-ken (JP); Hasei, Masaharu, c/o Kabushiki Kaisha Riken, Kumagaya-shi, Saitama-ken (JP)
(74) Representative: SERJEANTS

(57) **Abstract**

There is provided a gas sensor capable of accurately controlling the temperature of the gas detecting electrode forming part of the gas sensor. At least a positive leg or a negative leg of he thermocouple is connected to a detecting electrode or a counter-electrode formed on a solid electrolyte substrate and either a positive leg or a negative leg of the thermocouple is made to serve as a conductor section adated to take out an output signal from the detecting electrode.

## Description

### BACKGROUND OF THE INVENTION

### Field of the Invention

The present invention relates to a temperature-controllable gas sensor for accurately measuring concentrations of oxygen and oxide compounds, for example NOx in exhaust gas mixtures and a heater unit for use therein and more particularly, to an oxygen sensor or a NOx sensor which is directly disposed in the exhaust gas environment from an internal combustion engine or a furnace and which is capable of directly controlling the temperature of a gas concentration detecting section thereof.

As a method for detecting the temperature of a gas sensor, there have already been reported methods for embedding a ceramic thermistor, a Pt type thermocouple or a Pt temperature measuring resister (including a sensor making use of the resistor of a heater itself). One example of these methods is disclosed in Japanese Unexamined Patent Publication No.S54-137141(1979). However, there has existed a limitation to such embedded type temperature sensor capable of realizing a structure having an improved air-tightness by firing a heater simultaneously with a substrate. In the prior art technology, regarding temperature sensors capable of achieving the above-mentioned structure, only the above-mentioned embedding method for the ceramic thermistor, the Pt type thermocouple wire and the Pt temperature measuring resistor and the above-cited Japanese Unexamined Patent Publication No.S54-137141(1979) represents the embedding method itself for the temperature measuring resister.

However, these temperature measuring resistors have had the following problems. That is, the ceramic thermistor has had such essential problem that the temperature characteristic thereof is nothing but a logarithmic linearity and the temperature measuring accuracy is extremely bad. The method of embedding a thermocouple such as a Pt wire is extremely difficult to handle so that the productivity becomes poor. Further, the method in which a temperature measuring resistor is embedded has the disadvantage that the temperature measuring point exists over the entire area of the temperature measuring resistor (with the inclusion of the conductor section which is not included in the measuring area) so that the actual temperature measuring accuracy becomes bad. Moreover, without the exception of the ceramic thermistor, this method has the essential problem that the temperature measuring resistor itself deteriorates with a lapse of time.

### SUMMARY OF THE INVENTION

Accordingly, an object of the present invention is to provide temperature control means which is capable of controlling the temperature of a gas sensor, especially a vehicle-mounting gas sensor used in a severe environment over a prolonged period of time while securing a high degree of temperature measuring accuracy and reliability and which is also capable of accurately controlling the temperature of the sensor section, namely the temperature of the gas detecting section which is most sensitive to temperature.

Another object of the present invention is to provide a heater unit comprising a heater and a substrate capable of being fired integrally with each other and having a high degree of stabilized productivity over a prolonged period of time and a method of manufacture of such heater unit.

According to the present invention, the above-described objects have been achieved in such a manner that a thermocouple is directly arranged at the gas detecting section of a gas sensor and the temperature of the gas detecting section is controlled on the basis of the temperature detected by the thermocouple.

Where a gas sensor is produced by integrally burning a heater and a gas detecting electrode on a ceramic green sheet, the firing temperature becomes extremely high. Further, in the case of a gas sensor using an oxide type solid electrolyte substrate such as stabilized zirconia or the like, not a small amount of oxygen is essentially included in the firing atmospheric gas and when considering the resistance to oxidization, it is useful for the thermocouple to be of the B, R or S type which is constituted of a platinum type material defined by the JIS (Japanese Industrial Standards) C1602. As will be described later, an electrode made of a platinum-rhodium alloy or platinum or an oxide of NiCr₂O₄ is used for forming a gas detecting section.

According to the present invention, there are provided (1) a heater unit with a temperature measuring function which is characterized in that a printed conductor as a heater is embedded between layers of an insulating ceramic substrate and a printed thermocouple as a temperature measuring body comprising Pt as a negative or cathodic electrode and an alloy of Pt and Rh as a positive or anodic electrode is embedded in the substrate without contacting the heater; (2) a heater unit with a temperature measuring function which is characterized by the provision of a ceramic layer as an insulating body between the thermocouple and the heater; (3) a heater unit in which a collector conductor pattern connected to a ground potential is printed near a heater; and (4) a heater unit in which the printed thermocouple in the paragraph (1) is made of a thermocouple material with a composition ratio of the Pt-Rh alloy forming a positive electrode being in the range of 10 - 30wt%.

### BRIEF DESCRIPTION OF THE DRAWINGS

Fig. 1 is a plan view of a temperature detector unit as an example based on a first basic concept of the present invention in which a thermocouple is directly arranged in a gas detecting section;
Fig. 2 is a plan view of a temperature detector unit as an example based on a second concept of the present invention in which a conductor section of an electrode is used as a negative leg of a thermocouple at the same time;
Fig. 3 is a plan view of a temperature detector unit as an example based on a third concept of the present invention in which a conductor section of an electrode is used as a negative or positive leg of a thermocouple;
Fig. 4 is a plan view of a temperature detector unit as an example based on a fourth concept of the present invention in which a conductor section of an electrode serves as a positive leg of a thermocouple at the same time;
Fig. 5 is an exploded perspective view of a nitrogen oxide sensor according to an embodiment of the example shown in Fig. 1, wherein a temperature measuring section is arranged in a counter-electrode;
Fig. 6 is an exploded perspective view of a nitrogen oxide sensor according to an embodiment of the example shown in Fig. 2, wherein a conductor section of a counter-electrode serves as a negative leg of a thermocouple;
Fig. 7 is an exploded perspective view of a nitrogen sensor according to an embodiment of the example shown in Fig. 3, wherein a counter- electrode serves as a negative leg of a thermocouple;
Fig. 8 is an exploded perspective view of a nitrogen oxide sensor according to another embodiment of the example shown in Fig. 3, wherein a detecting electrode serves as a negative leg of a thermocouple;
Fig. 9 is an exploded perspective view of a nitrogen oxide sensor according to one embodiment of the example shown in Fig. 4, wherein the conductor section of the detecting electrode serves as a positive leg of the thermocouple;

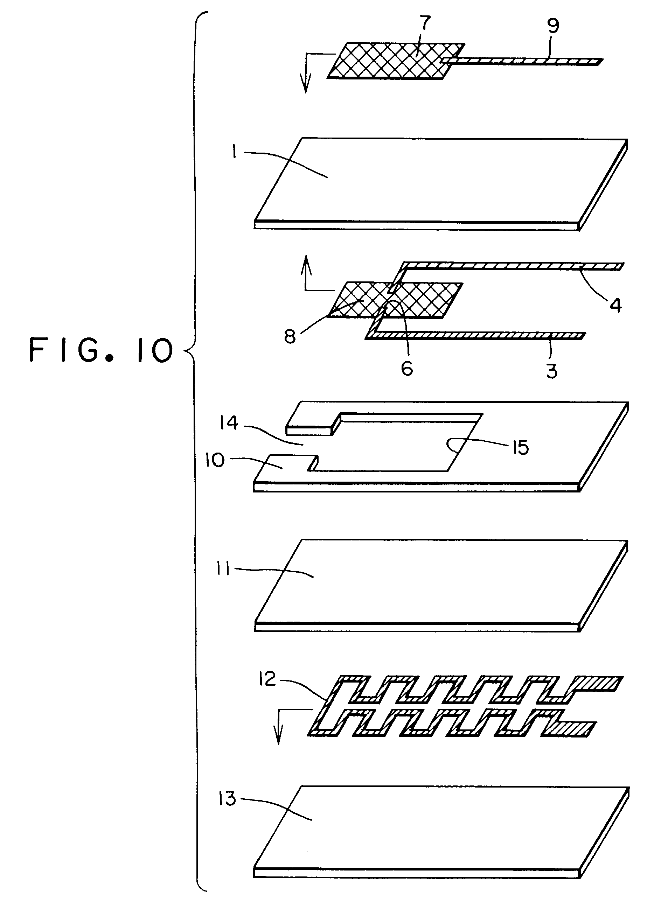

Fig. 10 is an exploded perspective view of a sensor having a nitrogen oxide gas detecting section and a heater integral therewith as an example of the present invention in which a counter-electrode serves as a negative leg of a thermocouple;
Fig. 11 is a diagram showing the relationship between the gas flow velocity and the surface temperature of each of a sensor according to the present invention and a conventional sensor as a comparison example ;
Fig. 12 is a plan view of an example of a heater unit in which a heater and a thermocouple of the present invention are printed;
Fig. 13 is a front view of an example of a laminated substrate of a sensor according to the present invention;

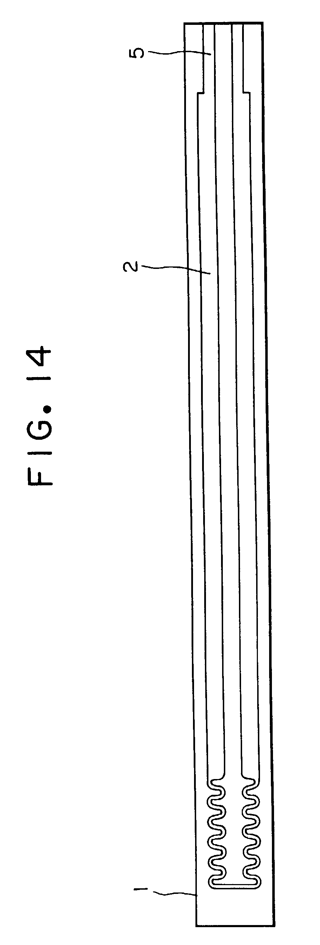

Fig. 14 is a plan view of an example of a heater unit in which a heater is printed on a substrate according to the present invention;

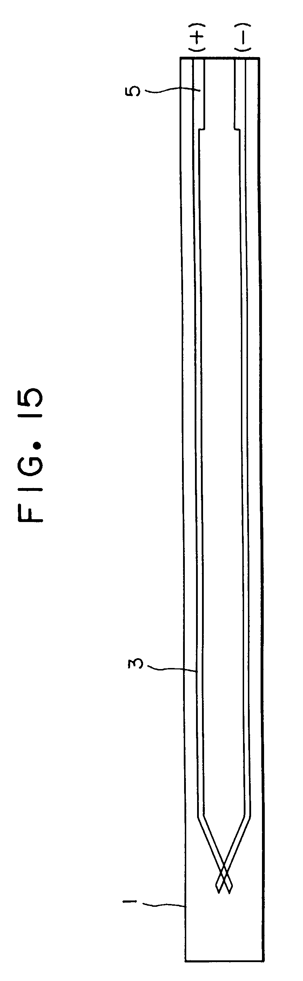

Fig. 15 is a plan view of an example of a heater unit in which a thermocouple is printed on a substrate according to the present invention;

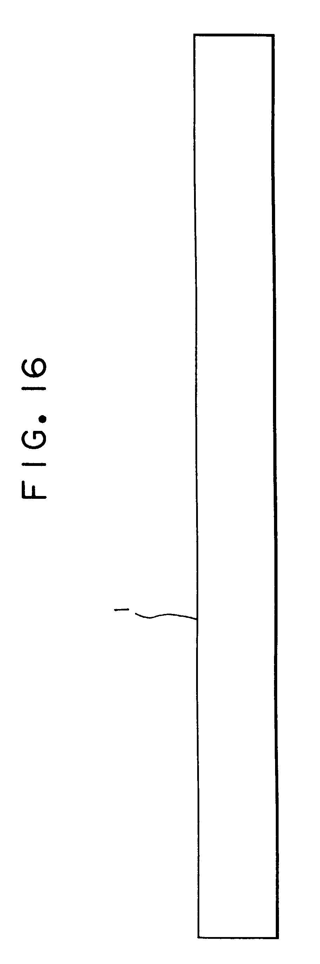

Fig. 16 is a plan view of a substrate having no heater and no thermocouple printed thereon;
Fig. 17 is a diagram showing the electromotive force output characteristic of an embedded printed thermocouple of a sensor according to the present invention especially when the sensor is set within an electrical furnace (no current is supplied to the heater substrate);
Fig. 18 is a diagram showing the electromotive force output characteristic of the embedded printed thermocouple in case the heater substrate according to the present invention is supplied with an electrical current;

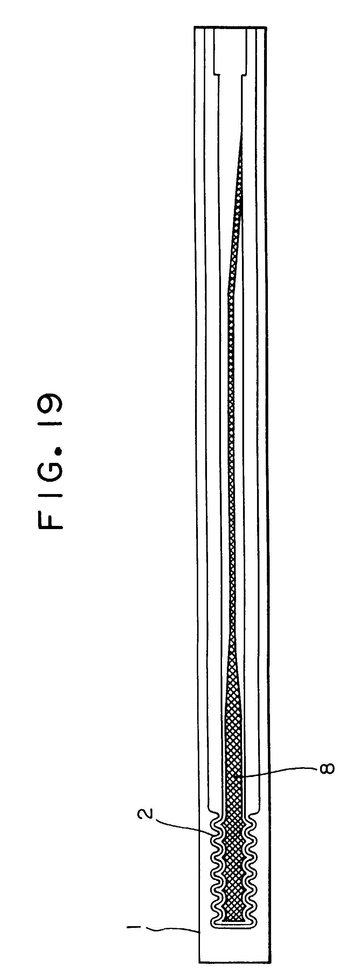

Fig. 19 is a plan view of an alumina sheet structure for the heater substrate according to the present invention;
Fig. 20 is a diagram showing the electromotive force output characteristic of an embedded printed thermocouple on a heater substrate incorporated with a collector shown in Fig. 8 when the heater substrate is set within an electrical furnace; and
Fig. 21 is a diagram showing the Rh composition of the negative electrode of the printed thermocouple and the electromotive force output characteristic (when measured at 600°C of the thermocouple).

### DETAILED DESCRIPTION OF THE PREFFERRED EMBODIMENTS

The present invention is adapted to measure the temperature of a portion close to a gas electrode or over the gas electrode on a substrate forming a gas detecting section by means of a thermocouple to thereby directly control a gas sensor driving temperature. The following is a detailed description of the arrangement of the thermocouple.

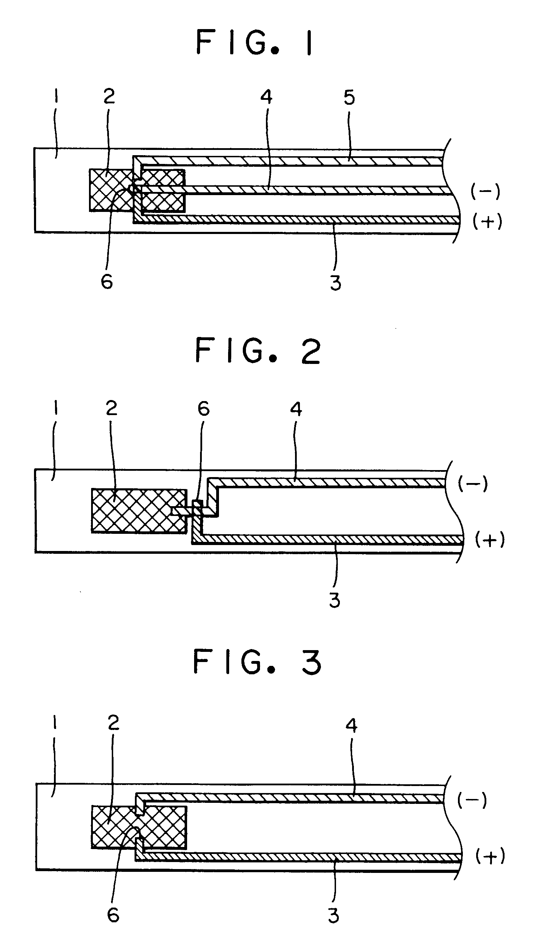

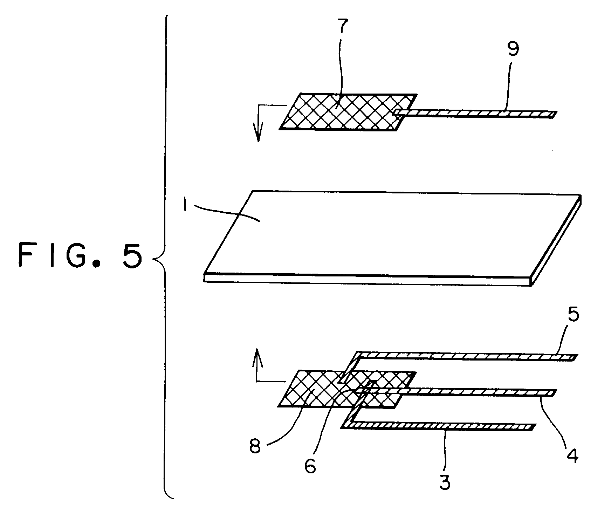

In Fig. 1 and Fig. 5 there is shown a method for directly arranging the thermocouple at the gas detecting section. As materials for the thermocouple, an alloy of platinum(Pt) and rhodium(Rh) is used for forming a positive leg 3 and platinum or the alloy of platinum and rhodium is used for forming a negative leg 4. In this case, if the ratio of platinum to rhodium is made the same as that in the case of the gas detecting section, the temperature resolution will become favorable . That is, where an electrode 2 is made of platinum, it is useful to make a negative leg of the thermocouple from platinum. Further, where the electrode 2 is made of an alloy of platinum and rhodium, it is useful to make either the negative leg 4 or the positive leg 3 in the same composition ratio as the electrode 2. Further, where the electrode materials are oxides and composite oxides which do not contain the platinum and rhodium of the thermocouple, no particular regulation is imposed on the platinum-rhodium ratio and it is possible to use a composition region in which a practical thermoelectromotive force can be generated.

There is no particular regulation on how to form the thermocouple legs 3 and 4. It is possible to make them with ease on a green sheet as a zirconia solid electrolyte substrate 1 forming a gas sensor by a screen printing method. A paste containing an alloy of platinum and rhodium forming the positive leg 3 is printed on the green sheet and a paste containing platinum or an alloy of platinum and rhodium for forming the negative leg 4 is so printed on the same sheet as to provide a contact at a temperature measuring section 6 to thereby form a thermocouple. In this case, even when the paste being used consists of a mixture of platinum and rhodium, the mixture becomes completely alloyed in the process of burning and sintering the green sheet itself at a temperature of higher than 1300°C and a favorable temperature measuring contact is obtained. The temperature measuring section 6 may be disposed at a position either inside or outside the electrode. Further, a conductor section 5 made of platinum and adapted to take out an output signal from the electrode 2 is made to be supported on the substrate 1 in the same manner as the thermocouple.

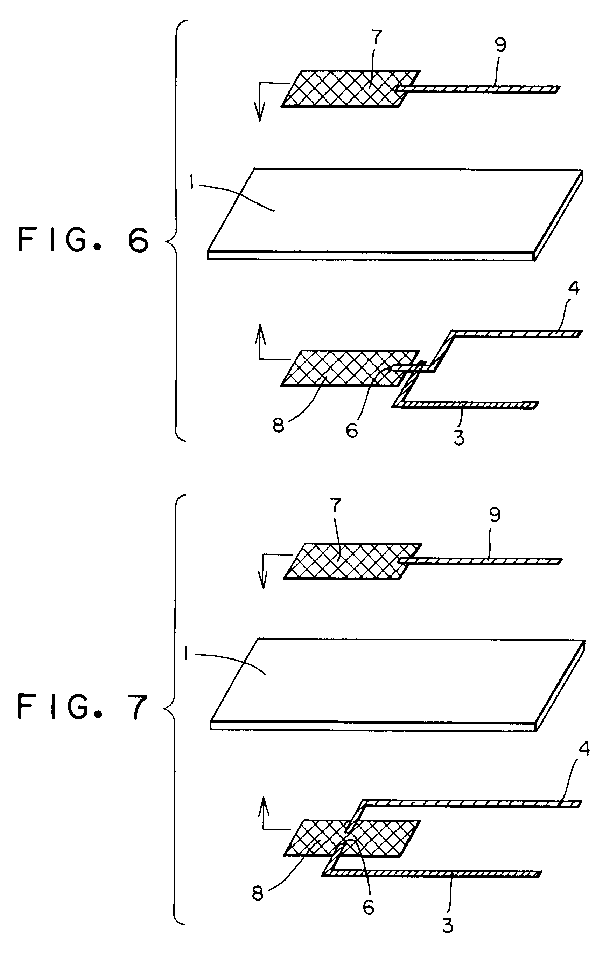

In Fig. 2 and Fig. 6 there is shown a method in which the conductor section for taking out the output signal from the electrode 2 forming the gas detecting section and the negative leg 4 of the thermocouple are used in common with each other. Where the conductor section is made of platinum or an alloy of platinum and rhodium, it is possible to use the conductor section in common with the negative leg 4 of the thermocouple. Because of the smallness of the number of printed wirings (the conductor section and the thermocouple) arranged in the surface of the same substrate 1, the size of the sensor can be reduced and the thermal efficiency of a heater to be provided can be improved. There is no particular regulation on the method of forming the thermocouple legs 3 and 4 but it is possible to form them with ease on the green sheet as the substrate 1 by a screen printing method. A paste consisting of platinum or an alloy of platinum and rhodium forming the negative leg 4 (serving as the conductor section) is printed and then a paste consisting of platinum or an alloy of platinum and rhodium for forming the positive leg 3 is so printed as to form a contact at the temperature measuring section 6 outside the electrode 2 to thereby form a thermocouple. Even when the paste being used is a mixture of platinum and rhodium, the mixture is completely alloyed in the process of firing and sintering the green sheet itself at a temperature higher than 1300°C and a favorable temperature measuring contact is obtained.

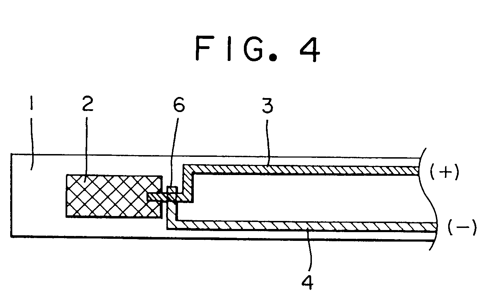

In Fig. 3 and Fig. 7 there is shown a method in which the electrode 2 for forming the gas detecting section and the conductor section for taking out the output signal from the gas detecting section are made of the same material as the negative leg 4 or the positive leg 3 of the thermocouple and the positive leg 3 or the negative leg 4 comes into contact with a portion of the electrode 2 to thereby form the temperature measuring section. (1) A paste containing platinum or an alloy of platinum and rhodium is printed as the electrode 2 and its conductor section to thereby form the negative leg 4 and a paste containing platinum or an alloy of platinum and rhodium for forming the positive leg 3 is so printed as to form the temperature measuring contact 6 at a portion of the electrode 2 thereby forming a thermocouple. (2) A paste consisting of platinum or an alloy of platinum and rhodium for forming the electrode 2 and its conductor section is printed to form the positive leg 3 and a paste containing platinum or an alloy of platinum and rhodium for forming the negative leg 4 is so printed as to provide the temperature measuring contact 6 at a portion of the electrode 2 to thereby provide a thermocouple.

That is, in either of the processes (1) and (2), the electrode 2 detects the gas sensitivity and functions as the negative leg 4 or the positive leg 3 of the thermocouple. Consequently, it is possible to control the temperature of the electrode 2 itself which contributes to the gas sensitivity of the gas sensor and the influence of the temperature on the gas sensing characteristic can be reduced and the resolution of the measured gas density can be improved. Further, even when the paste being used consists of a mixture of platinum and rhodium, the mixture is completely alloyed in the process of firing and sintering the green sheet itself at a temperature higher than 1300°C so that a favorable temperature measuring contact can be obtained. Further, it is preferable for the electrode 2 to be a porous film as a gas electrode and it is more favorable for it to be an electrode material added with a sintering preventive material such as alumina or zirconia containing platinum or an alloy of platinum and rhodium as a main component thereof. Further, even when such electrode material is used, it has no influence on the thermoelectromotive force of the thermocouple and also on the gas density output.

The method for forming the thermocouple of the present invention directly at the gas detecting section is applicable to all sensors in which the potential difference between the detecting electrode and the reference electrode (counter- electrode) becomes a gas detecting signal. That is, it can be applied even to the mixed potential type and variable density electromotive force type gas sensors.

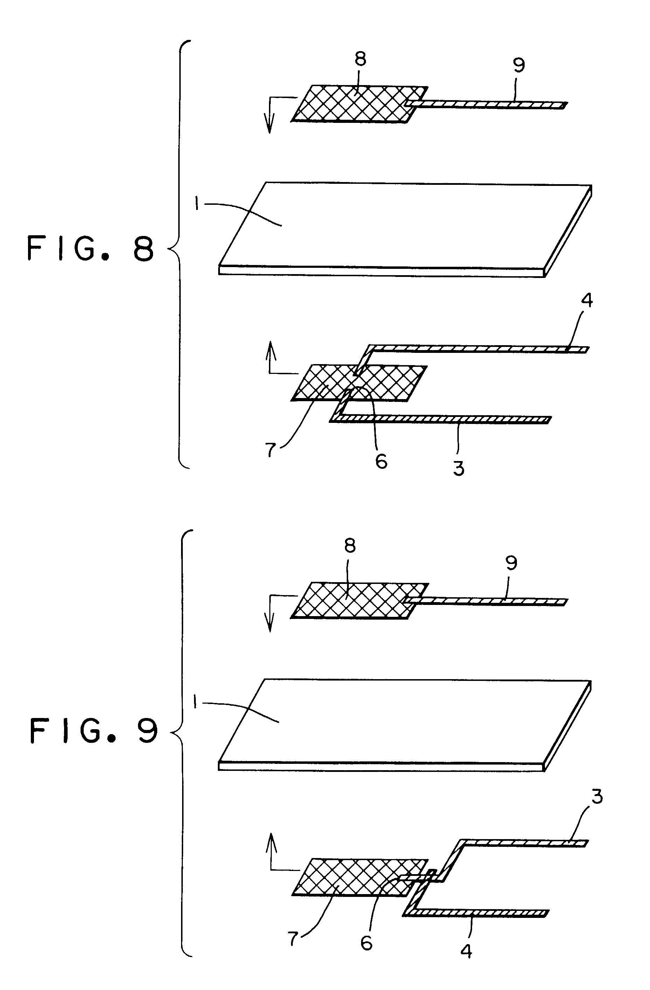

In Fig. 4 and Fig. 8 there is shown a method in which the conductor section for taking out the output signal from the electrode 2 forming the gas detecting section serves as the positive leg 3 of the thermocouple at the same time. A paste containing platinum or an alloy of platinum and rhodium to become the positive leg 3 (serving as the conductor section) is printed and a paste containing an alloy of platinum and rhodium to form the negative leg 4 is printed to thereby form a thermocouple. Even when the paste being used is a mixture of platinum and rhodium, the mixture is completely alloyed in the process of firing and sintering the green sheet for forming the substrate 1 at a temperature higher than 1300°C and a favorable temperature measuring contact is obtained.

The preferred embodiments of the present invention will now be described in detail with reference to the accompanying drawings.

### (Embodiment 1)

A potential detecting type nitrogen oxide sensor using a solid electrolyte having thereon a thermocouple arrangement shown in Fig. 5 was provided by using the following materials and procedures. That is, a detecting electrode 7, a counter-electrode 8, conductor sections 5 and 9, and a thermocouple (with legs 3 and 4) were formed by screen printing on a green sheet 1 comprising a 6 mol% yttria-stabilized zirconium and molded and processed to a size of ^{t}0.2 x ^{w}6 x ^{l}80mm. The conductor sections 9 and 5 for the detecting electrode 7 and the counter-electrode 8, and the negative leg 4 of the thermocouple were formed by using a Pt paste. The positive leg 3 of the thermocouple was formed by using a Pt-13wt% Rh alloy paste. The detecting electrode 7 was formed by coating a NiCr₂O₄ composite oxide paste. This paste was obtained in such a manner that a powder of NiCr₂O₄ prepared by a solid phase method was crushed by a ball mill and after drying the crushed powder, ethyl cellulose and a solvent were mixed therewith. The counter-electrode 8 was formed by coating a Pt paste. As regards the thermocouple, the following two kinds of it were prepared. That is, (1) a type having a temperature measuring section 6 in the detecting electrode 7 and (2) a type having a temperature measuring section 6 in the counter electrode 8. Thus, the green sheet having the above-mentioned electrodes, the conductor section and the thermocouple formed thereon was fired at a temperature of 1400°C for three hours to thereby obtain the nitrogen oxide sensor.

The sensor thus prepared was then heated in an electrical furnace and the temperature characteristic of the thermocouple was evaluated. At the same time, the gas sensitivity of the gas sensor was examined by setting the gas sensor in a simulation gas having a known composition while keeping the temperature of the electrical furnace at 600 °C . Further, the gas sensitivity of a nitrogen oxide sensor having no thermocouple arranged therein was also examined for comparison and evaluation purposes. As a result, it was found that the temperature obtained by the sensor through the thermoelectromotive force of its thermocouple was coincident with the temperature of the electrical furnace. Further, the following table 1 shows that the gas sensitivity characteristic of the gas sensor is not affected by the formation of a temperature measuring section of the thermocouple in the detecting electrode or in the counter electrode.

**(Table 1)**

| | Electrical furnace setting temperature (°C) | Measured temperature (°C) by thermocouple | Gas sensitivity characteristic | |
|---|---|---|---|---|
| | | | 200ppm NO₂ | 200ppm NO |
| Product of this invention | 230 | 229 | - | - |
| | 319 | 319 | - | - |
| | 410 | 412 | - | - |
| | 511 | 509 | - | - |
| | 608 | 608 | - | - |
| | 708 | 710 | - | - |
| | 601 | 600 | 51.2 | -21.4 |
| Contrast or Comparison example | 601 | - | 51.4 | -21.5 |

### (Embodiment 2)

A potential detecting type nitrogen oxide sensor using a solid electrolyte having thereon a thermocouple arrangement shown in Fig. 6 was prepared by using the following materials and procedures. That is, a detecting electrode 7, a counter-electrode 8, conductor sections 5 and 9, a thermocouple (with legs 3 and 4) were formed by screen printing on a green sheet 1 consisting of a 6 mol% ytttria-stabilized zirconium molded to a size of ^{t}0.2 x ^{w}6 x ^{l}80mm. The conductor sections 9 and 5 for the detecting electrode 7 and the counter electrode 8 and the negative leg 4 of the thermocouple were formed by using a Pt paste. The negative leg 4 of the thermocouple was used in common with the conductor section of the counter-electrode 8. The positive leg 3 of the thermocouple was formed by using a Pt-13wt% Rh alloy paste. The detecting electrode 7 was formed by coating a NiCr₂O₂ composite oxide paste. This paste was obtained in such a manner that a powder of NiCr₂O₄ prepared by a solid phase method was crushed by a ball mill and after drying the crushed powder, ethyl cellulose and a solvent were mixed therewith. The counter-electrode 8 was formed by coating a Pt paste. Thus, the green sheet having the above-mentioned electrodes, the conductor section and the thermocouple formed thereon was fired at a temperature of 1400°C for three hours to thereby obtain the nitrogen oxide sensor.

The sensor thus prepared was then heated in an electrical furnace and the temperature characteristic of the thermocouple was evaluated. At the same time, the gas sensitivity of the gas sensor was examined by setting the gas sensor in a simulation gas having a known composition while keeping the temperature of the electrical furnace at 600 °C . Further, the gas sensitivity of a nitrogen oxide sensor having no thermocouple arrangement therein was also examined for comparison and evaluation purposes. As a result, it was found that the temperature obtained by the sensor through the thermoelectromotive force of its thermocouple was coincident with the temperature of the electrical furnace. The following table 2 shows that the gas sensitivity characteristic of the gas sensor is not affected even when the negative leg of the thermocouple and the conductor section of the counter-electrode are used in common with each other.

**(Table 2)**

| | Electrical furnace setting temperature (°C) | Measured temperature (°C)by thermocouple | Gas sensitivity characteristic | |
|---|---|---|---|---|
| | | | 200ppm NO₂ | 200ppm NO |
| Product of this invention | 230 | 228 | - | - |
| | 319 | 318 | - | - |
| | 410 | 412 | - | - |
| | 511 | 510 | - | - |
| | 608 | 609 | - | - |
| | 708 | 710 | - | - |
| | 601 | 601 | 51.3 | -21.3 |
| Contrast of Comparison example | 601 | - | 51.4 | -21.5 |

### (Embodiment 3)

A potential detecting type nitrogen oxide sensor using a solid electrolyte having thereon a thermocouple arrangement shown in Fig. 7 was prepared by using the following materials and procedures. That is, a detecting electrode 7, a counter-electrode 8, a conductor section 9 and a thermocouple (with positive and negative legs 3 and 4) were formed by screen printing on a green sheet 1 comprising a 6 mol% yttria-stabilized zirconium and molded and processed to a size of ^{t}0.2 x ^{w}6 x ^{l}80mm. The counter-electrode 8, the conductor section 9 and the negative leg 4 of the thermocouple (serving as the conductor section of the counter-electrode 8) were formed by using a Pt paste. The positive leg 3 of the thermocouple was so formed as to provide a temperature measuring section 6 at a portion of the counter-electrode 8 by using a Pt-13wt% alloy paste. The detecting electrode 7 was formed by coating a NiCr₂O₄ composite oxide paste. This paste was obtained in such a manner that a powder of NiCr₂ O₄ prepared by a solid phase method was crushed by a ball mill and after drying the crushed powder, ethyl cellulose and a solvent were mixed therewith. Thus, the green sheet having the above-mentioned electrodes, the conductor section and the thermocouple formed thereon was fired at a temperature of 1400°C for three hours to thereby obtain the nitrogen oxide sensor.

The sensor thus prepared was then heated in an electrical furnace and the temperature characteristic of the thermocouple was evaluated. At the same time, the gas sensitivity of the gas sensor was examined by setting the gas sensor in a simulation gas having a known composition while keeping the temperature of the electrical furnace at 600 °C . Further, the gas sensitivity of a nitrogen oxide sensor having no thermocouple positive leg arranged therein was also examined for comparison and evaluation purposes. As a result, it was found that the temperature obtained by the sensor through the thermoelectromotive force of its thermocouple was coincident with the temperature of the electrical furnace. Further, the following table 3 shows that the gas sensitivity characteristic of the sensor is not affected even when the negative leg of the thermocouple is made to be a counter-electrode (and a conductor section of the counter-electrode).

**(Table 3)**

| | Electrical furnace setting temperature (°C) | Measured temperature (°C) by thermocouple | Gas sensitivity characteristic | |
|---|---|---|---|---|
| | | | 200ppm NO₂ | 200ppm NO |
| Product of this invention | 230 | 230 | - | - |
| | 319 | 320 | - | - |
| | 410 | 411 | - | - |
| | 511 | 511 | - | - |
| | 608 | 609 | - | - |
| | 708 | 709 | - | - |
| | 601 | 600 | 51.2 | -21.3 |
| Contrast or Comparison example | 601 | - | 51.4 | -21.5 |

### (Embodiment 4)

A potential detecting type nitrogen oxide sensor using a solid electrolyte having thereon a thermocouple arrangement shown in Fig. 8 was prepared by using the following materials and procedures. That is, a detecting electrode 7, a counter-electrode 8, a conductor section 9 and a thermocouple (with positive and negative legs 3 and 4) were formed by screen printing on a green sheet 1 comprising a 6 mol% yttria-stabilized zirconia and molded and processed to a size of ^{t}0.2 x ^{w}6 x ^{l}80mm. The counter-electrode 8 and the conductor section 9 were formed by using a Pt paste. The detecting electrode 7 and the negative leg 4 of the thermocouple (serving as the conductor section of the detecting electrode) were formed by coating a Pt-6wt%Rh alloy paste. The positive leg 3 of the thermocouple was so formed as to provide a temperature measuring contact 6 at a portion of the detecting electrode 7 by using a Pt-13wt%Rh alloy paste. Thus, the green sheet having the above-mentioned electrodes, the conductor section and the thermocouple formed thereon was fired at a temperature of 1400°C for three hours to thereby obtain the nitrogen oxide sensor.

The sensor thus prepared was then heated in an electrical furnace and the temperature characteristic of the thermocouple was evaluated. At the same time, the gas sensitivity of the sensor was examined by setting the gas sensor in a simulation gas having a known composition while keeping the temperature of the electrical furnace at 600°C. Further, the gas sensitivity of a nitrogen oxide sensor having no positive leg of the thermocouple arranged therein was also examined for comparison and evaluation purposes. As a result, it was found that the temperature obtained by the sensor through the thermoelectromotive force of its thermocouple was coincident with the temperature of the electrical furnace. Further, the following table 4 shows that even when the negative leg of the thermocouple is made to be a detecting electrode (and its conductor section), the gas sensitivity characteristic of the sensor is not affected thereby.

**(Table 4)**

| | Electrical furnace setting temperature (°C) | Measured temperature (°C) by thermocouple | Gas sensitivity characteristic | |
|---|---|---|---|---|
| | | | 200ppm NO₂ | 200ppm NO |
| Product of this invention | 230 | 230 | - | - |
| | 319 | 319 | - | - |
| | 410 | 411 | - | - |
| | 511 | 512 | - | - |
| | 608 | 608 | - | - |
| | 708 | 709 | - | - |
| | 601 | 601 | 71.5 | -26.4 |
| Contrast or Comparison example | 601 | - | 71.6 | -26.4 |

### (Embodiment 5)

A potential detecting type nitrogen oxide sensor using a solid electrolyte having thereon a thermocouple arrangement shown in Fig. 9 was prepared by using the following materials and procedures. That is, a detecting electrode 7, a counter-electrode 8, a conductor section 7 and a thermocouple (with positive and negative legs 3 and 4) were formed by screen printing on a green sheet 1 comprising a 6 mol% yttria-stabilized zirconia and molded and processed to a size of ^{t}0.2 x ^{w}6 x ^{l}80mm. The counter-electrode 8 and the conductor section 9 were formed by using a Pt paste. The detecting electrode 7 was formed by coating a NiCr₂O₄ composite oxide paste. This paste was obtained in such a manner that a powder of NiCr₂O₄ prepared by a solid phase method was crushed by a ball mill and after drying the crushed powder, ethyl cellulose and a solvent were mixed therewith. The positive leg 3 of the thermocouple is used to also serve as the conductor section of the detecting electrode 7 and is formed by using a Pt-13wt%Rh alloy paste. The negative leg 4 of the thermocouple was prepared by using a Pt paste. Thus, the green sheet having the above-mentioned electrodes, the conductor section and the thermocouple formed thereon was fired at a temperature of 1400°C for three hours to thereby prepare the nitrogen oxide sensor.

The sensor thus prepared was then heated in an electrical furnace and the temperature characteristic of the thermocouple was evaluated. At the same time, the gas sensitivity of the gas sensor was examined by setting the sensor in a simulation gas having a known composition while keeping the temperature of the electrical furnace at a temperature of 600°C. Further, a nitrogen oxide sensor having no negative leg of a thermocouple arranged therein was also examined for comparison and evaluation purposes. As a result, it was found that the temperature obtained by the sensor through the thermoelectromotive force of the thermocouple was coincident with the temperature of the electrical furnace. Further, the following table 5 shows that the gas sensitivity characteristic of the gas sensor is not affected even when the negative leg of the thermocouple is used in common with the conductor section of the counter-electrode.

**(Table 5)**

| | Electrical furnace setting temperature (°C) | Measured temperature (°C) by thermocouple | Gas sensitivity characteristic | |
|---|---|---|---|---|
| | | | 200ppm NO₂ | 200ppm NO |
| Product of this invention | 230 | 230 | - | - |
| | 319 | 320 | - | - |
| | 410 | 411 | - | - |
| | 511 | 511 | - | - |
| | 608 | 609 | - | - |
| | 708 | 709 | - | - |
| | 601 | 600 | 51.1 | -21.1 |
| Contrast or Comparison example | 601 | - | 51.4 | -21.5 |

### (Embodiment 6)

A sensor comprising a potential detecting type nitrogen oxide gas detecting section using a solid electrolyte having a thermocouple arrangement and a heater integral therewith was prepared by using the following materials and procedures. A detecting electrode 7, a counter-electrode 8, a conductor section 9 and a thermocouple (with positive and negative legs 3 and 4) were formed by screen printing on a green sheet 1 comprising 6 mol% yttria-stabilized zirconia molded and processed to a size of ^{t}0.2 x ^{w}6 x ^{l}80mm. The counter-electrode 8, the conductor section 9 and the negative leg 4 of the thermocouple (serving also as the conductor section of the counter-electrode). The positive leg 3 of the thermocouple is so formed as to provide a temperature measuring section contact 6 at a portion of the counter-electrode 8 by using a Pt-13wt%Rh alloy paste. The detecting electrode 7 was formed by coating a NiCr₂O₄ composite oxide paste. Further, this composite oxide paste was obtained in such a manner that a powder of NiCr₂O₄ prepared by a solid phase method was crushed by a ball mill and after drying the crushed powder, ethyle cellulose and a solvent were mixed therewith.

Then, a ceramic plate 10 having an opening 14 and a square window 15 is arranged opposite to the solid electrolyte substrate 1. This ceramic plate 10 may be made of the same material as the substrate 1 and an electrical heater 12 is held sandwiched therebetween.

The heater 12 was formed by screen printing using a high-purity Pt paste. A high-purity alumina printed layer is formed on a green sheet 13 made of the same material and having the same size as the above-mentioned ceramic plate 10, the heater pattern 12 is printed thereon and another high-purity alumina printed layer is laminated thereon.

Thus, a plurality of green sheets having the above-mentioned electrodes, the conductor section, the thermocouple and the heater formed thereon were laminated and fired at a temperature of 1400°C for three hours to thereby prepare a heater-integrated nitrogen oxide sensor.

The sensor thus prepared was set in a simulation gas having a known composition and the gas sensitivity of the sensor was examined by keeping the sensor section at a temperature of 600°C by controlling the driving voltage of the heater on the basis of the temperature detected by the thermocouple with the result shown in the following table 6. From this table , it will be understood that the gas sensitivity of the sensor is in coincidence with that which is shown in the table 3.

**(Table 6)**

| | Measured temperature (°C) by thermocouple | Gas sensitivity characteristic | |
|---|---|---|---|
| | | 200ppm NO₂ | 200ppm NO |
| Product of this invention | 600 | 51.3 | -21.3 |

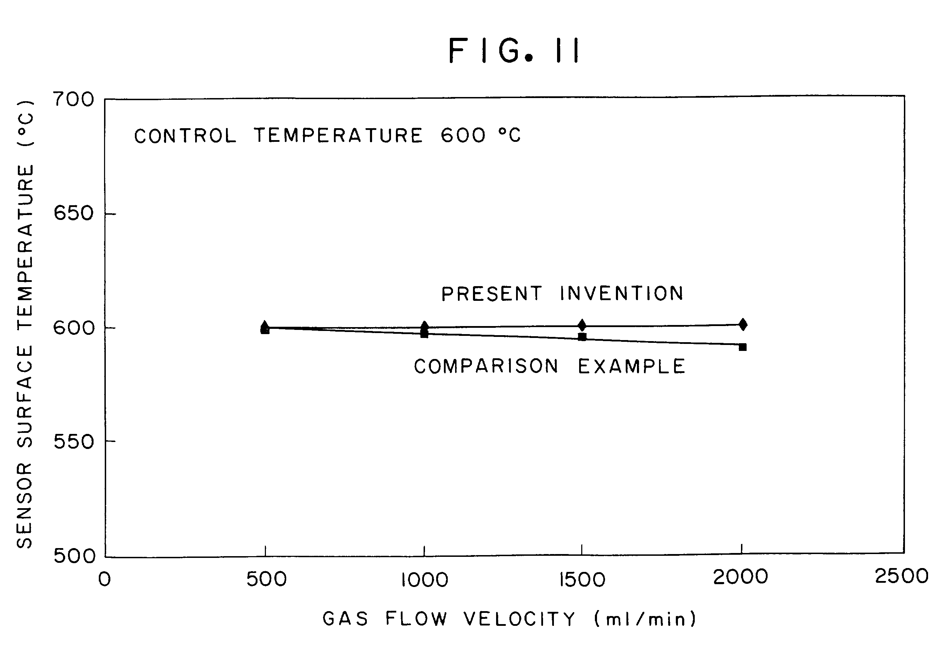

In Fig. 11, there is shown a result of variation of the temperature of the surface of the sensor when the flow velocity of the sensor was varied. The controlling temperature was 600°C. In the case of a conventional method as a comparison example in which a R-thermocouple was formed on the same surface as the heater, the measurement was performed by applying a K-thermocouple to the surface of the detecting electrode. As a result, it was found that in the case of the conventional method, when the gas flow velocity was increased, the temperature of the sensor section decreased to some degree while in the case of the method of the present invention, no temperature drop at the sensor section was observed.

In the case of a gas sensor provided with a heating mechanism, it is possible to set the temperature of the gas detecting section to a predetermined target value to thereby improve the resolution of the gas sensitivity by the arrangement that a thermocouple is directly provided at the gas detecting section and the heating section is controlled by the temperature detected by the thermocouple.

### (Embodiment 7)

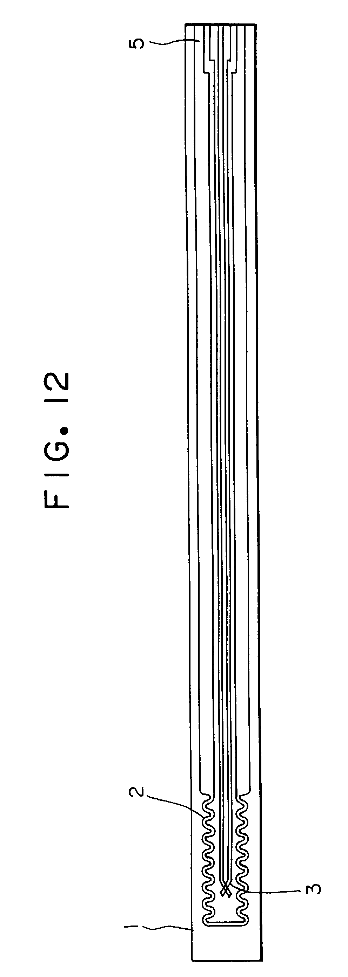

One embodiment of a basic heater substrate according to the present invention which comprises an alumina plate 1 having a heater 2 and a thermocouple 3 embedded therein will be described by referring to Fig. 12 and downward. In this embodiment, two kinds of heater substrate structures were prepared.

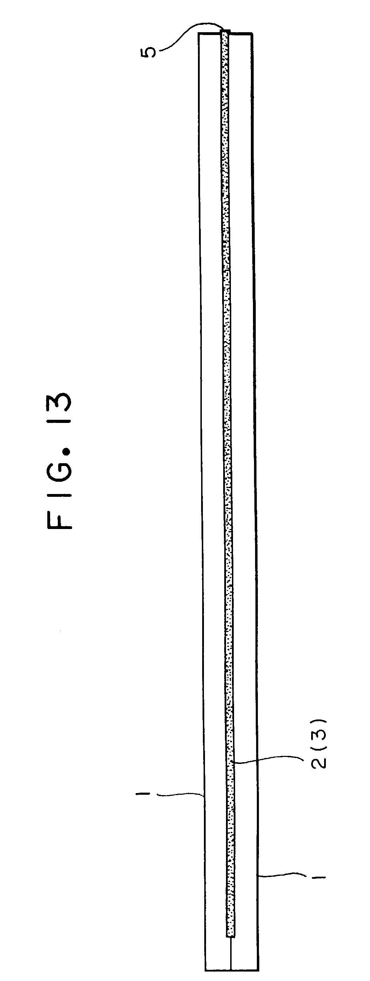

First, a heater unit of a first structure will be described. An alumina green sheet of a purity of 99.5% and a thickness of 300m was used to form a substrate 1. The heater 2 and the thermocouple 3 were printed on one side surface of the alumina sheet by screen printing. To form the heater 2, a Pt paste of normal grade was used. After air-drying the sheet for one hour, a Pt-Rh (13wt% mixing) paste for a positive electrode was so printed as to provide a contact with a negative electrode. This Pt-Rh paste is a mixture of Pt powder and Rh powder and the composition thereof mainly consisted of an organic binder and an organic solvent capable of dissolving the binder. These organic substances would be gasified at the time of burning in the atmosphere. After that, an alumina sheet 1 having no print thereon was prepared and after inserting a Pt lead wire 5 between the sheets 1 and 1, both of the sheets were laminated and pressure-bonded by heating.
Then, the lamination was fired in an atmospheric burning furnace at a temperature of 1580°C for five hours. (Refer to Fig. 13)

### (Embodiment 8)

Next, a heater unit of a second structure will be described. For forming this heater unit, alumina green sheets and printing pastes same as those used for the heater unit of the first structure were used. On an alumina sheet 6 there was printed only a heater unit 2 forme4d by using a Pt paste of normal grade. On an alumina sheet 7 a thermocouple 3 having a negative electrode of a high-purity paste and a positive electrode of a Pt-Rh paste is printed at a position corresponding to a heater's heating section. Further, an alumina sheet 8 with no print thereon which was same as the alumina sheet 4 of the first-structure heater unit was prepared. The sheets 6, 7 and 8 were laminated in that order and the lamination was pressure-bonded by heating. The firing of the lamination was performed in the same batch as the first-structure heater unit sample.

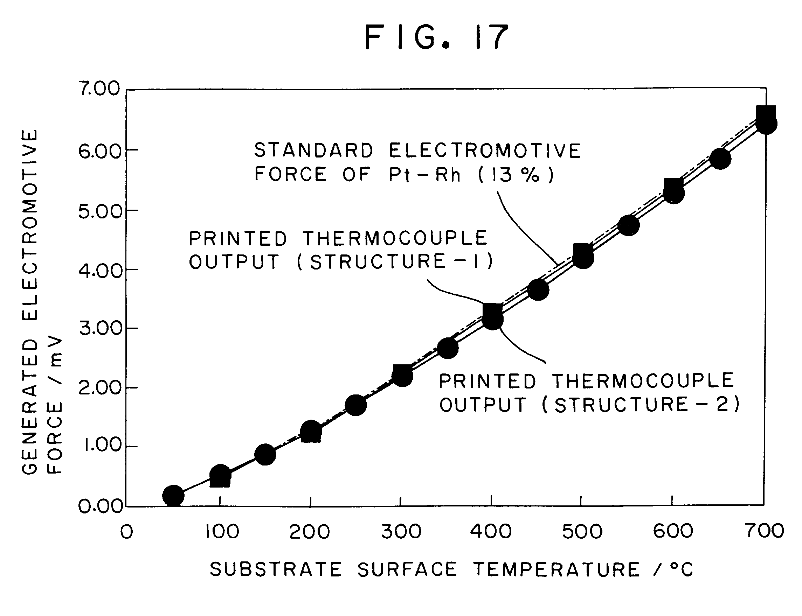

The characteristic of the thermocouple of each of the first-structure and second-structure heater units thus prepared was measured in the following manner. That is, a K-thermocouple (wire) was fixed to the thermocouple-side surface of each of the heater units. In this case, care was taken not to allow the portion other than the contacts to be short-circuited. Each of these heater units with K-thermocouples was set in an electrical furnace and the output of the K-thermocouple was used to control the temperature of the electrical furnace. Fig.17 shows the relationship between output of the printed thermocouple and the surface temperature of the substrate (temperature detected by the K-thermocouple) at this time. Irrespective of whether the heater unit was of the first-structure or the second-structure, the standard electromotive, the electromotive force of the thermocouple of the heater unit in the instant embodiment almost coincides with the Pt-Rh (13%) reference electromotive force( standard electromotive force of a R-thermocouple shown by a chain line in Fig. 17) and from this fact, it will be understood that the printed thermocouple itself according to the present invention has the same electromotive force characteristic as a commercially available Pt/Pt-Rh thermocouple wire. In practice, it was confirmed as a result of analysis of another sample for X-ray diffraction that when the Pt-Rh (13%) paste was fired at a temperature of 1580°C, Pt and Rh were completely dissolved in solid phase (alloyed).

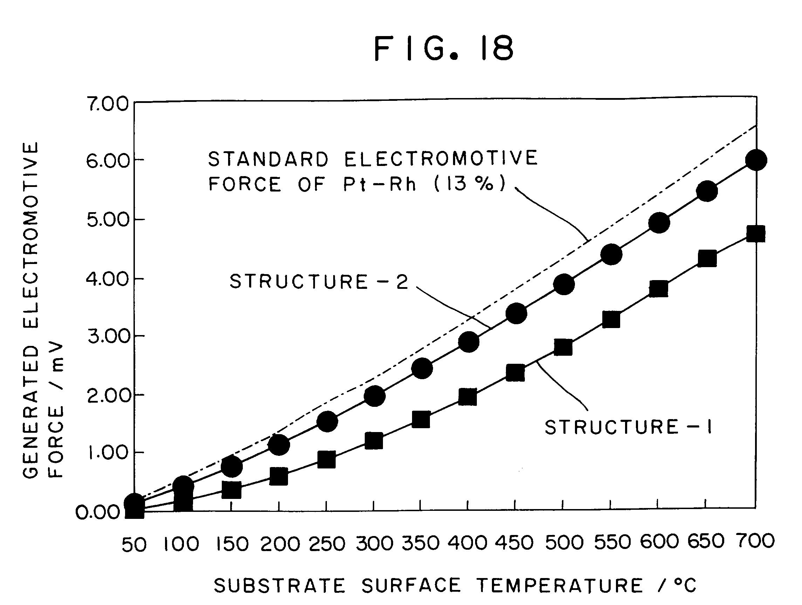

With respect to the first-structure and second -structure heater units prepared in the embodiments 7 and 8, respectively, the substrate surface temperatures and the electromotive forces of the two heater units were compared by applying a heater voltage thereon with results shown in Fig. 18. The chain line in the drawing shows the standard electromotive force of Pt-Rh (13%) (i.e., the standard electromotive force of R-thermocouple). From Fig. 18 it will be seen that the electromotive force of the printed thermocouple at the time of driving the heater drops as compared to the time when the heater is not driven. Further, the degree of thermoelectromotive force at the time of driving the heater differs depending on the structural difference of the heater unit. That is, the printed thermocouple formed on the same surface of the heater is extremely less influenced than that formed by laminating insulating layers. As a result of actual measurement of a heater leak current flowing through the printed thermocouple at the time of driving each of the heater units of the embodiments 7 and 8, it was confirmed that the larger the leak current, the greater the degree of lowering of the electromotive force. Accordingly, when considering a scene of the actual use of a heater unit, it is apparent that the insulation between the printed thermocouple and the heater becomes extremely important. However, this can be said only of a case where the heater unit is compared with the standard electromotive force of a commercially available thermocouple and therefore, if the structure and the operating condition are constant, no specific adherence to the standard electromotive force is necessary.

### (Embodiment 9)

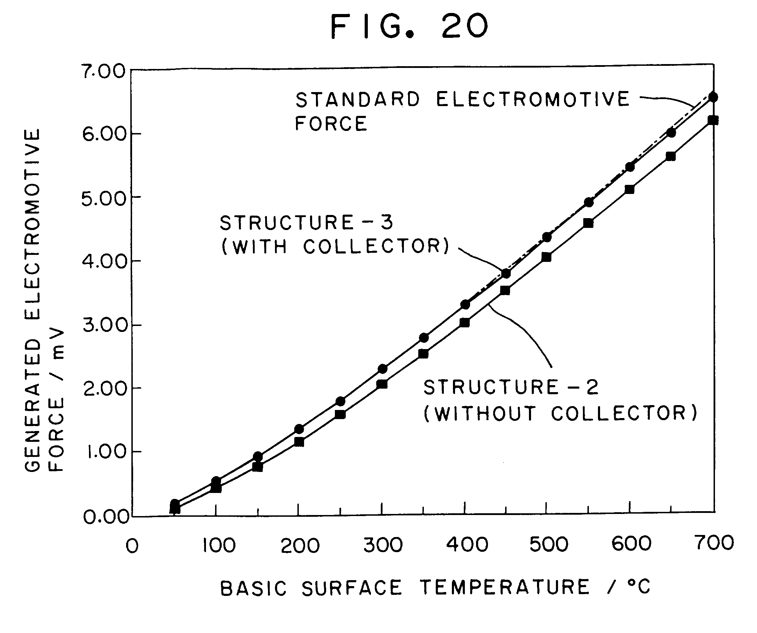

A third -structure heater unit was prepared by forming a collector 8 in the heater unit shown in the embodiments 7 and 8. The collector 8 was formed by screen printing of a Pt paste of normal grade. This collector patter was held at ground potential. This third-structure heater unit comprises a lamination of a substrate 1 having a heater 2 and the collector 8 formed thereon, a substrate 7 having a printed heater 3 and a single substrate 4. Like in the case of the embodiment 8, the heater was driven for the purpose of comparing the surface temperature of the substrate with the electromotive force of the printed thermocouple. As a result, as will be clear from Fig. 20, a heater unit quite similar to the standard electromotive force of the Pt-Pt/Rh (13wt%) thermocouple was obtained. That is, it can be said that the reduction of the leak current of the heater is extremely important for obtaining an accurate electromotive force.

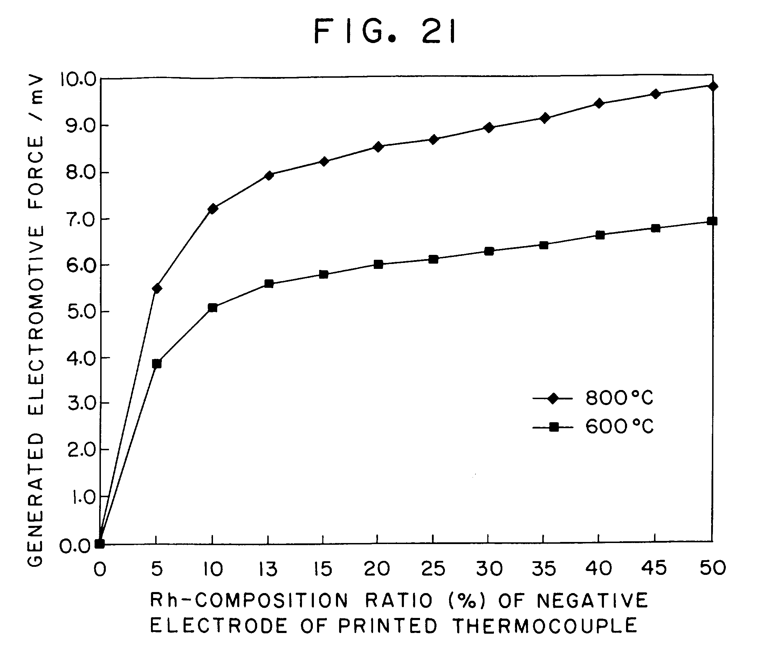

The electromotive force characteristic of the printed thermocouple was examined by varying the Rh composition ratio of the positive electrode Pt-Rh mixed powder paste used in the embodiment 7. The adjustment of the composition ratio of Rh was performed by kneading a mixture of a Pt-Rh (50w3t%) paste and a high-purity Pt paste by using an agata mortar. The heater unit used was the first-structure heater unit but it was not driven for heating and the electromotive force characteristic of the heater unit was measured in an electrical furnace. As in the case of the previous embodiment, a K-thermocouple was attached to the substrate . Fig. 21 shows the relationship between the Rh composition ratio of the printed thermocouple's positive electrode and the electromotive force of the thermocouple. As will be clear from Fig. 21, the electromotive force rapidly decreases when the Rh composition ratio is less than 10% but when exceeding 20%, the electromotive force tends to become gradually saturated. Further, it was confirmed that with the use of samples of the composition ratios for X-ray analysis, all of Pt and Rh were alloyed and the amount of addition of Rh and the crystal lattice constant were linearly related with each other.

All the pastes for the printed thermocouple positive electrodes used in the embodiments 7 through 9 were mixed pastes of Pt and Rh powders. In the instant embodiment, the manufacturing stability of the Rh composition was examined by forming a printed thermocouple with the use of a newly prepared Pt-Rh alloy powder. The target Rh composition ratio was 15.0% in both of the mixing and alloying method. As regards the paste prepared by the mixing method, the Rh composition was adjusted in the same way as in the case of the embodiment 9. As regards the paste prepared by the alloying method, an alloy powder having an Rh composition ratio of 15.0% was prepared by a direct coprecipitation method. In either of the methods, a composition ratio of 15.0% was not attained due to a manufacturing error. Therefore, the composition of a ready-made paste was analyzed before and after high-temperature firing and comparison was made on the basis of the rate of variation of the Rh composition ratio. Since many organic substances such as a binder and the like are contained in the paste, the paste was fired in the atmosphere at a temperature of 700 °C to completely remove the organic substances by oxidation. Then, the paste was fired in the atmosphere at a temperature of 1650°C for five hours and the Pt-Rh composition ratio before and after the 1650°C firing was examined by ICP analysis with the result shown in the following table 7.

**(Table 7)**

| Pt-Ph paste producing method | Rh composition ratio in (Pt-Rh) | | Rate of variation of Rh composition |
|---|---|---|---|
| | Before high temperature firing | After high temperature firing | |
| Mixed paste | 15.3% | 14.4% | -5.9% |
| Alloyed paste | 14.8% | 14.7% | -0.7% |

That is, it is considered that with a paste prepared by the mixing method, the evaporation of Rh is more liable to take place at the time of high-temperature firing than in the case of a paste prepared by the alloying method. Of course, it can be easily imagined that the atmospheric firing method in which the density of oxygen in the sheet firing atmosphere is reduced can prevent such evaporation of Rh. Therefore, by the use of a printed paste prepared according to the alloying method in the manufacture of a gas sensor, it is possible to sharply reduce the composition ratio of Rh. Of course, the printed thermocouple prepared by the alloying method showed a normal electromotive force characteristic.

When considering the situation in which the gas sensor of the present invention is used in an automobile exhaust gas atmosphere, the present invention has the following effects.
(1) It is possible to print a heater and a thermocouple directly on a ceramic green sheet and to fire them integrally.
(2) The air-tightness can be easily attained with a ceramic sheet laminated structure and the deterioration of the heater and the thermocouple hardly takes place.
(3) It is possible to micronize the heater unit itself since the heater and the thermocouple can be formed by screen printing.
(4) It is possible to minimize the temperature measuring area and to specify the temperature measuring section with ease.
(5) Since the heater and the thermocouple can be prepared by a screen printing method, an inexpensive and high-productivity manufacture can be made possible.

## Claims

1. A gas sensor comprising a gas detecting electrode (2) and a reference electrode (7) formed on a solid electrolyte substrate (1) and adapted to detect the density of a gas on the basis of a potential difference between the two electrodes, wherein a thermocouple having a negative leg (4) made of a platinum or a platinum-rhodium alloy with an amount of rhodium expressed by Rh/ (Pt + Rh) being 0 - 7wt% and a positive leg (3) made of a platinum-rhodium alloy with the amount of rhodium expressed by Rh/ (Pt + Rh) being 9 - 30 wt% is directly arranged at a gas detecting section comprising said gas detecting electrode (2), said reference electrode (7) and a conductor (5) extending from said electrodes so that the temperature of the gas detecting section is monitored by said thermocouple.

2. The gas sensor as described in claim 1, wherein the conductor (5) for taking an output signal from the electrodes forming said gas detecting section serves also as the negative leg (4) of said thermocouple.

3. The gas sensor as described in claim 1, wherein the electrodes (2,7) and the conductor (5) for taking said output signal from said electrodes are made of the same material as the negative leg (4) of said thermocouple and the positive leg of said thermocouple comes into contact with a portion (6) of said one of said electrodes to thereby provide an electromotive force generating contact.

4. The gas sensor as described in claim 1, wherein said conductor (5) for taking an output signal from the electrodes forming the gas detecting section serves also as the positive leg (3) of said thermocouple.

5. The gas sensor as described in claim 1, wherein said electrodes (2,7) and said conductor (5) for taking an output signal from the electrodes forming the gas detecting section are made of the same material as the positive leg (3) of said thermocouple and the negative leg (4) of said thermocouple comes into contact with a portion of one of said electrodes (2,7) to thereby provide an electromotive force generating contact.

6. A gas sensor comprising a detecting electrode (8) and a counter-electrode (7) formed on a solid electrolyte substrate (1), a first conductor section (5) extending from one of said electrodes and a thermocouple having a pair of legs (3,4) at least one of which is electrically connected to the other electrode and the other of which serves as a second conductor section for the other electrode, said detecting electrode consisting of NiCr₂O₄ or a Pt-Rh alloy and said counter-electrode consisting of Pt.

7. The gas sensor as described in claim 6, wherein the negative leg (4) of said thermocouple serves as said second conductor section (5).

8. The gas sensor as described in claim 6, wherein the positive leg (3) and the negative leg (4) of said thermocouple are connected to said counter-electrode (7).

9. The gas sensor as described in claim 6, wherein a heater (12) supported on another substrate (13) is held alongside one of said electrodes (7,8) but spaced from the electrodes.

10. A gas sensor comprising a solid electrolyte substrate (1), a detecting electrode (8), a first conductor section (3 or 4) electrically connected to said detecting electrode (8), a counter-electrode (7), a second conductor section (9) electrically connected to said counter-electrode and a thermocouple (3,4) having its temperature measuring contact formed at said counter-electrode (7), said detecting electrode (8) and said first conductor section (3 or 4) being supported on one of surfaces of said solid electrolyte substrate (1) while said counter-electrode (7) and said second conductor section (9) are supported on the other surface of said solid electrolyte substrate (1).

11. The gas sensor as described in claim 10, wherein at least a positive leg (3) or a negative leg (4) of said thermocouple is connected to said counter-electrode (7), said counter-electrode (7) is held alongside an electrical heater (12) but spaced from the heater (12) and the temperature of a gas detecting section of the sensor is controlled by a temperature signal detected by said thermocouple.

12. A heater unit wherein a printed conductor as a heater (2) is embedded in an insulating ceramic substrate (1) and a printed thermocouple (3) as a temperature measuring body having a negative leg made of Pt and a positive leg made of a mixture or an alloy of Pt and Rh and adapted to measure the temperature of a predetermined heated portion of said substrate is embedded in said substrate (1) without contacting said heater (2).

13. The heater unit with a temperature measuring function as described in claim 12, wherein a ceramic layer as an insulator is provided between said thermocouple (3) and said heater (2).

14. The heater unit as described in claim 12, wherein a collector conductor pattern connected to ground potential is printed near said printed heater (2).

15. The heater unit as described in claim 12, wherein the Pt-Rh alloy composition ratio of the positive leg of said thermocouple (3) is 10 - 30 wt%Rh.

16. The heater unit as described in claim 12, wherein said substrate (1) is made of zirconia and said heater (2) and said thermocouple (3) are printed and embedded in a printed insulating layer formed on said zirconia substrate (1).

17. A heater unit wherein a printed conductor as a heater (2) is embedded in an insulating ceramic substrate (1) so that the heater (2) is used as a resistor temperature measuring body.

18. A method of manufacture of a heater unit provided with a heater and a thermocouple spaced apart from said heater, said method comprising the steps of preparing a paste for forming a positive electrode of said thermocouple by mixing a Pt powder and a Rh powder in a predetermined ratio, said paste is printed on a ceramic green sheet and firing said green sheet and said printed paste after lamination to thereby make said positive leg of a Pt-Rh alloy.

19. A method of manufacture of a heater unit provided with a heater and a thermocouple spaced apart from said heater, said method comprising the steps of preparing an alloy powder for forming a positive electrode of said thermocouple by alloying Pt and Rh in a predetermined composition ratio, printing said paste on a ceramic green sheet and firing said green sheet and said printed paste integrally after lamination to thereby make said positive leg of a Pt-Rh alloy.
